# EUROPÄISCHE PATENTSCHRIFT

(11) **EP 2 031 089 B1**
(45) Veröffentlichungstag und Bekanntmachung des Hinweises auf die Patenterteilung: **12.03.2014**
(21) Anmeldenummer: 08014209.4
(22) Anmeldetag: 08.08.2008
(51) Int. Cl.: C23C 22/86, B01D 61/24, C22B 3/00, C22B 7/00, B01D 63/02, B01D 63/06

(54) **Vorrichtung und Verfahren zur selektiven Abtrennung zumindest eines Metalls aus einem Phosphatierungsbad**
Device and method for selective separation of at least one metal from a phosphation bath
Dispositif et procédé de séparation sélective d'au moins un métal d'un bain au phosphate

(30) Priorität: 08.08.2007 DE 102007037421
(43) Veröffentlichungstag der Anmeldung: 04.03.2009
(73) Patentinhaber: VDEh-Betriebsforschungsinstitut GmbH, 40237 Düsseldorf (DE)
(72) Erfinder: Wolters, Dr. Ralf, 47229 Duisburg (DE); Wendler, Dr. Barbara, 40476 Düsseldorf (DE)
(74) Vertreter: Tilmann, Max Wilhelm

(56) Entgegenhaltungen:
- DE-A1- 19 854 431
- JP-A- 2002 102 788
- US-A- 3 957 504
- SAMANIEGO H ET AL: "Kinetics of zinc recovery from spent pickling effluents" INDUSTRIAL AND ENGINEERING CHEMISTRY RESEARCH 20070131 AMERICAN CHEMICAL SOCIETY US, Bd. 46, Nr. 3, 31. Januar 2007 (2007-01-31), Seiten 907-912, XP002502765
- KLAASSEN ET AL: "Membrane Contactors in Industrial Applications" CHEMICAL ENGINEERING RESEARCH AND DESIGN, PART A, INSTITUTION OF CHEMICAL ENGINEERS, XX, Bd. 83, Nr. 3, 1. März 2005 (2005-03-01), Seiten 234-246, XP022536322 ISSN: 0263-8762

## Beschreibung

Die Erfindung betrifft ein Verfahren zur selektiven Abtrennung zumindest eines Metalls aus einem Phosphatierungsbad.

Unter einer Phosphatierung versteht man die Herstellung einer schwerlöslichen Metallphosphatschicht auf einem metallischen Grundkörper. Die Phosphatierung dient dem Korrosionsschutz und stellt häufig einen wesentlichen Behandlungsschritt der metallverarbeitenden Industrie sowie insbesondere in der Automobilindustrie dar.

Beim Phosphatieren wird das Metallbauteil mit einem Phosphatierungsbad in Kontakt gebracht. Dabei bildet sich auf der Oberfläche eine dünne, mit dem Grundwerkstoff fest verbundene Metallphosphatschicht. Die verwendeten Metalle sind häufig Eisen, Zink, Mangan oder Nickel sowie Kombinationen dieser, können aber auch andere Metalle oder Kombinationen dieser sein.

Die Metallphosphatschicht dient häufig auch als Haftgrund für eine nachfolgende Lackbeschichtung und soll ein Unterrosten der Lackschicht verhindern.

Das Phosphatierungsbad wird durch den Kontakt mit den Metallbauteilen verbraucht. In der Regel reichert sich das Phosphatierungsbad mit Fremdmetallen an. Vor allem damit das Phosphatierungsbad eine gute Wirksamkeit behält, muss es regelmäßig ersetzt werden.

Vor allem in der Automobilindustrie besteht die Forderung, daß keine Fremdstoffe das Phosphatierungsbad verunreinigen dürfen. Bei der konventionellen Flüssig-flüssig-Extraktion kann allerdings nicht ausgeschlossen werden, daß Fremdstoffe in das Phosphatierungsbad eingebracht werden. Deshalb wird die konventionelle Flüssig-flüssig-Extraktion für Phosphatierungsbäder nicht eingesetzt. Bei der Flüssig-flüssig-Extraktion werden mit Hilfe eines Extraktionsmittels eine oder mehrere Komponenten aus einem Prozessbad entfernt. Bei der konventionellen Flüssig-flüssig-Extraktion wird dazu das Extraktionsmittel mit dem Prozessbad durch Vermischen direkt in Kontakt gebracht. Hierzu werden verschiedene Apparate eingesetzt, vor allem Mixer - Settler - Apparate und Kolonnen.

Aus der US 3,957,504 ist es bekannt, zur Metallextraktion aus wässriger in organischer Phase eine Ionentauschmembran mit einem Diffusionskoeffizienten der Membran von ca. 10-5 bis 10-8 cm²/sek. einzusetzen. Bei dem hier eingesetzten Extraktionsverfahren besteht kein Kontakt der Phasen. Das Metall *diffundiert* durch die Membran.

Aus dem Artikel "Membrane contactors in industrial applications" von Klaassen et al., Chemical Engineering Research and Design, Part A, Institution of Chemical Engineers, XX-Bd.83, Nr. 3, 1. März 2005, Seiten 234 - 246 (D3) ist die Nutzung eines Membrankontaktors für die Metallentfernung aus einem Passivierungsbad bekannt. Dort wird das Fremdmetall Zink zur Badpflege aus einer Passivierung abgetrennt mit einer Zielkonzentration von ca. 1 g/l. Eine derartige Vorrichtung ist nicht auf die Phosphatierung anwendbar, da die Phosphatierungsmetalle - insbesondere Mangan und Nickel - nicht in dem erforderlichen Maß extrahiert werden können.

In JP 2002-102788 A (D4) werden Hochdruck-Verfahren, wie beispielsweise die Nanofiltration oder die Umkehrosmose beschrieben. Dabei handelt es sich um druckbetriebene Membranverfahren, bei denen das Spülwasser *durch die Membran hindurchtritt.* Dabei werden Phosphatierungsbad und Phosphatier-Spülwasser zusammengeführt und dann in Permeat und Konzentrat getrennt. Das zu behandelnde Fluid wird einer Membran zugeführt, von der dann ein Konzentrat und ein Permeat abgeführt werden. Dieser Membran wird aber kein Extraktionsmittel zugeführt.

Vor diesem Hintergrund liegt der Erfindung die Aufgabe zugrunde, und ein Verfahren zur selektiven Abtrennung eines Metalls aus einem Phosphatierungsbad vorzuschlagen, das zumindest einen Nachteil des Standes der Technik vermeidet. Insbesondere sollen bevorzugt die Wertmetalle, d.h. Metalle, die wegen ihres Werts eine Rückgewinnung lohnend machen, für einen Wiedereinsatz, beispielsweise in der Phosphatierung, zur Verfügung gestellt und/oder die Standzeit der Phosphatierungsbäder, bzw. Spülbäder erhöht und/oder eine kostenintensive Entsorgung des Phosphatierungsbads, bzw. des Spülwassers vermieden werden.

Diese Aufgabe wird durch den Gegenstand des Anspruchs 1 gelöst. Vorteilhafte Ausführungsformen sind in den Unteransprüchen wiedergegeben.

Die Erfindung geht von dem Grundgedanken aus, anstelle eines unmittelbaren Kontakts des Phosphatierungsbads mit dem Extraktionsmittel die Phasen durch eine Membran voneinander zu trennen. In einer bevorzugten Ausführungsform ist die Membran derart ausgebildet, daß sie einen Übergang von Extraktionsmittel in das Phosphatierungsbad verhindert und somit ausschließt, daß Fremdstoffe in das Phosphatierungsbad eingebracht werden.

Die Vorrichtung zur selektiven Abtrennung zumindest eines Metalls aus einem Phosphatierungsbad weist einen ersten Durchflusskanal auf, durch den das Phosphatierungsbad geführt wird.

Die Vorrichtung weist ferner einen zweiten Durchflusskanal auf, durch den ein Extraktionsmittel fließt. In einer bevorzugten Ausführungsform wird als Extraktionsmittel z. B. D2EHPA (Di-2-(ethylhexyl)-phosphorsäure) oder LIX84 (5-T-nonyl-2-hydroxyacetophenonoxim) verwendet. Es können auch andere Extraktionsmittel oder Mischungen von Extraktionsmitteln zum Einsatz kommen. Die Extraktionsmittel können mit einem organischen Lösemittel verdünnt werden.

Ebenso weist die Vorrichtung eine Membran auf, die auf ihrer einen Seite den ersten Durchflusskanal und auf ihrer zweiten Seite den zweiten Durchflusskanal zumindest teilweise begrenzt und zumindest den Durchtritt des abzutrennenden Metalls in das Extraktionsmittel erlaubt.

Der Aufbau der Vorrichtung zur selektiven Abtrennung zumindest eines Metalls aus einem Phosphatierungsbad führt zur Trennung von Phosphatierungsbad und Extraktionsmittel. Die Phasen sind durch die Membran getrennt, gleichzeitig bildet die Membran die Phasengrenzfläche für den Stoffübergang des Metalls.

Die Querschnittsform des jeweiligen Durchflusskanals kann jede beliebige Form haben. In einer bevorzugten Ausführungsform ist der Durchflusskanal rohrförmig oder als Flachkanal ausgebildet. In einer besonders bevorzugten Ausführungsform ist der erste Durchflusskanal rohrförmig ausgebildet und wird unter Bildung des zweiten Durchflusskanals von einem weiteren Rohr umgeben, so daß der zweite Durchflusskanal durch den Ringraum zwischen dem rohrförmigen ersten Durchflusskanal und dem weiteren Rohr gebildet wird.

Die Anordnung der Vorrichtung in einer Gesamtvorrichtung, insbesondere die Anordnung der Vorrichtung relativ zu einem Becken, in dem die zu behandelnden Metallstücke in Kontakt mit dem Phosphatierungsbad gebracht werden, ist frei wählbar. In einer bevorzugten Ausführungsform weist die Vorrichtung eine Phosphatierungsbad-Zufuhr auf, mit dem Phosphatierungsbad, das mittels eines Ablaufs aus einem Becken abgezogen wurde, der Vorrichtung zugeführt wird.

Im Rahmen dieser Beschreibung wird unter dem Begriff Phosphatierungsbad eine Flüssigkeit verstanden, die zuvor bei der Phosphatierung eines Metallbauteils als die Flüssigkeit verwendet wurde, mit der das Metallbauteil zur Phosphatierung in Kontakt gebracht wurde. Obwohl sich die chemische Zusammensetzung des Phosphatierungsbads zwischen dem Becken, in dem das Phosphatierungsbad mit dem Metallbauteil in Kontakt gekommen ist, und dem ersten Durchflusskanal ändern kann, beispielsweise durch zwischengeschaltete Vorbehandlungen, wird im Rahmen dieser Beschreibung auch die Flüssigkeit als Phosphatierungsbad bezeichnet, wie sie nach Vorbehandlungsschritten, wie insbesondere der pH-Wert Anpassung, Ausfällung oder Filtrierung, vorliegt. Die Erfindung ist zudem auf Spülwasser von Phosphatierungsanlagen anwendbar, so daß im Rahmen dieser Erfindung unter dem Begriff Phosphatierungsbad auch das Spülwasser einer Phosphatierungsanlage verstanden wird. Das Spülwasser entsteht bei einem der Phosphatierung nachgeschalteten Spülschritt. Es enthält die Inhaltsstoffe des Phosphatierungsbads in verringerter Konzentration.

In einer bevorzugten Ausführungsform ist die Membran derart ausgestaltet, daß sie nur den Durchtritt des abzutrennenden Metalls, bzw. der abzutrennenden Metalle erlaubt. Die Erfindung kann zur selektiven Abtrennung eines einzigen Metalls aus dem Phosphatierungsbad verwendet werden, wenn ein entsprechendes Extraktionsmittel verwendet wird. Die Erfindung kann jedoch auch die gleichzeitige Abtrennung mehrerer Metalle möglich machen, wenn ein entsprechendes Extraktionsmittel verwendet wird. Zur Vereinfachung wird in der nachfolgenden Beschreibung lediglich Bezug auf ein Metall genommen, ohne hierdurch die Anwendbarkeit oder den beantragten Schutz auf die Abtrennung eines einzigen Metalls zu beschränken.

Insbesondere bevorzugt ist die Membran derart ausgebildet, daß sie bei geeigneter Prozessführung einen Durchtritt des Extraktionsmittels durch die Membran in das Phosphatierungsbad verhindert.

Die Membran wird durch eine Hohlfasermembran, eine Kapillarmembran, eine Rohrmembran oder eine Flachmembran gebildet. Unter einer Hohlfasermembran wird ein Membrankörper verstanden, der einen inneren Durchflusskanal (Innenkanal) aufweist, der von einer Innenoberfläche des Membrankörpers begrenzt wird. Ferner weist der eine Hohlfasermembran bildende Membrankörper eine Außenoberfläche auf. In der Regel weist eine Hohlfasermembran eine rohrförmige Bauform auf. Der Innenkanal der Hohlfasermembran weist insbesondere bevorzugt einen Durchmesser von 100 µm bis 250µm auf.

Die erfindungsgemäße Membran kann ebenso durch eine Kapillarmembran oder eine Rohrmembran gebildet werden. Eine Kapillarmembran und eine Rohrmembran weisen einen zu einer Hohlfasermembran vergleichbaren Aufbau auf und sind in der Regel ebenfalls rohrförmig ausgebildet. Die Kapillarmembran und die Rohrmembran unterscheiden sich von der Hohlfasermembran in der Regel durch den Durchmesser des Innenkanals. Bei einer Kapillarmembran weist der Innenkanal einen Durchmesser von 250 µm bis 5 mm auf. Bei einer Rohrmembran weist der Innenkanal einen Durchmesser von 5mm bis 25 mm auf. Beim Einsatz einer Hohlfaser-, Kapillar- oder Rohrmembran kann der Innenkanal den ersten Durchflusskanal bilden. In einer alternativen Ausführungsform bildet der Innenkanal den zweiten Durchflusskanal.

Die Membran der Vorrichtung kann ebenso beispielsweise durch eine Flachmembran gebildet werden. Flachmembranen werden in Form von sogenannten Plattenmodulen eingesetzt.

In einer bevorzugten Ausführungsform weist die Vorrichtung eine Mehrzahl von ersten Durchflusskanälen und eine Mehrzahl von Membranen auf, die auf ihrer einen Seite jeweils einen Durchflusskanal zumindest teilweise begrenzen und auf ihrer zweiten Seite einen zweiten Durchflusskanal zumindest teilweise begrenzen. Beispielsweise kann die Vorrichtung ein Hohlfaserbündel aufweisen.

Bei der bevorzugten Ausführungsform, bei der die Vorrichtung eine Mehrzahl von ersten Durchflusskanälen und eine Mehrzahl von Membranen aufweist, kann ein einziger zweiter Durchflusskanal vorgesehen sein, so daß die Membrane auf ihren zweiten Seiten jeweils einen Teil des zweiten Durchflusskanals begrenzen, beispielsweise wenn ein Hohlfaserbündel in einem Behälter angeordnet wird, so daß der Zwischenraum zwischen der Außenoberfläche der Hohlmembrane und der Behälterinnenwand den zweiten Durchflusskanal bildet. Ebenso kann bei einer solchen Ausführungsform jede Membran auf ihrer zweiten Seite einen eigenen zweiten Durchflusskanal zumindest teilweise begrenzen. Die Verwendung einer Mehrzahl von Hohlfasermembranen ermöglicht es, innerhalb eines gegebenen Volumens eine möglichst große Austauschfläche zwischen dem Phosphatierungsbad und dem Extraktionsmittel zu bilden.

In einer bevorzugten Ausführungsform weist die Vorrichtung eine Rückgewinnungsvorrichtung auf, mit der die in das Extraktionsmittel eingebrachten Metalle aus dem Extraktionsmittel gewonnen werden. Eine derartige Rückgewinnungsvorrichtung kann eine zweite Membran aufweisen, an der das Extraktionsmittel auf der einen Seite und eine Stripsäure auf der anderen Seite vorbeigeführt werden. Eine solche zweite Membran kann derart ausgebildet sein, daß das in das Extraktionsmittel eingebrachte Metall durch die zweite Membran in die Stripsäure übertritt.

Alternativ kann die Rückgewinnungsvorrichtung eine Mixer-Settler-Vorrichtung aufweisen. Im Mixer-Settler wird eine Re-Extraktion des Metalls durchgeführt. Bei einer Mixer-Settler-Vorrichtung werden die Flüssigkeiten nach der Durchmischung zum Absetzen der Phasen beruhigt.

Ergänzend kann die Rückgewinnungsvorrichtung eine Kristallisationsvorrichtung aufweisen. In einer Kristallisationsvorrichtung wird z. B. durch Temperaturabsenkung eine Absenkung der Löslichkeitsgrenze und eine Ausfällung des Metalls erzielt.

In einer bevorzugten Ausführungsform weist die Vorrichtung eine Rückführung zumindest eines Teils des Phosphatierungsbads, das den ersten Durchflusskanal durchflossen hat, zurück an den Anfang des ersten Durchflusskanals auf. Ergänzend und alternativ weist die Vorrichtung eine Rückführung zumindest eines Teils des Extraktionsmittels, das den zweiten Durchflusskanal durchflossen hat, zurück an den Anfang des zweiten Durchflusskanals auf. Durch die Rückführung des Phosphatierungsbads, bzw. des Extraktionsmittels kann die Effizienz der Abtrennung des Metalls aus dem Phosphatierungsbad erhöht werden.

Bei dem erfindungsgemäßen Verfahren wird der pH-Wert des Phosphatierungsbads in einer Vorbehandlung angepasst und das Phosphatierungsbad durch einen ersten Durchflusskanal geführt. Ein Extraktionsmittel fließt durch einen zweiten Durchflusskanal. Das abzutrennende Metall tritt durch eine Membran, die auf ihrer einen Seite den ersten Durchflusskanal und auf ihrer zweiten Seite den zweiten Durchflusskanal zumindest teilweise begrenzt, in das Extraktionsmittel über.

Der Aufbau der Vorrichtung zur selektiven Abtrennung zumindest eines Metalls aus einem Phosphatierungsbad führt zu einer Trennung von Phosphatierungsbad und Extraktionsmittel. Die Phasen sind durch die Membran getrennt, gleichzeitig bildet die Membran die Phasengrenzfläche für den Stoffübergang des Metalls.

Das Phosphatierungsbad und das Extraktionsmittel können im Gleichstrom an den jeweiligen Seiten der Membran vorbeigeleitet werden oder - in einer alternativen Ausführungsform - im Gegenstrom.

In einer bevorzugten Ausführungsform wird das Phosphatierungsbad, das durch den ersten Durchflusskanal geführt wird, mit einem höheren Druck durch den ersten Durchflusskanal geführt, als der Druck, mit dem das Extraktionsmittel durch den zweiten Durchflusskanal fließt. Auf diese Weise kann vermieden werden, daß das Extraktionsmittel in das Phosphatierungsbad, bzw. das Spülwasser gelangt. Die Druckdifferenz zwischen Phosphatierungsbad und Extraktionsmittel liegt bevorzugt bei 0,2 bis 2 bar. Ein Übertritt von Extraktionsmittel in das Phosphatierungsbad oder umgekehrt kann z.B. durch Messung der Trübung der Phasen erkannt werden.

In einer bevorzugten Ausführungsform wird der Übertritt von Extraktionsmittel in das Phosphatierungsbad dadurch verhindert, dass die Pumpe für das Extraktionsmittel nur freigeschaltet wird, sobald die notwendige Druckdifferenz aufgebaut ist.

In einer bevorzugten Ausführungsform wird das in das Extraktionsmittel eingebrachte Metall in einer Rückgewinnungsvorrichtung aus dem Extraktionsmittel gewonnen.

In einer bevorzugten Ausführungsform tritt das in das Extraktionsmittel eingebrachte Metall in der Rückgewinnungsvorrichtung durch eine zweite Membran in eine Stripsäure über.

In einer bevorzugten Ausführungsform werden die Volumina von Phosphatierungsbad und Extraktionsmittel so gewählt, dass eine Aufkonzentrierung des Metalls im Extraktionsmittel erfolgt, also eine höhere Metallkonzentration erreicht wird als im Phosphatierungsbad. Auch kann durch Wahl des Volumenverhältnisses in der Stripsäure eine höhere Metallkonzentration erreicht werden als im Extraktionsmittel.

In einer bevorzugten Ausführungsform weist das Phosphatierungsbad beim Durchfluss durch den ersten Durchflusskanal eine Temperatur von > 20° und < 90° auf, besonders bevorzugt über Raumtemperatur und < 40° für beide Phasen. Ergänzend oder alternativ weist das Extraktionsmittel beim Durchfluss durch den zweiten Durchflusskanal eine Temperatur von > 20° und < 90° auf. Es hat sich gezeigt, daß die Abtrennung des Metalls bei diesen Bedingungen besonders gut funktioniert.

In einer bevorzugten Ausführungsform des erfindungsgemäßen Verfahrens wird der Teil des Phosphatierungsbads, bzw. der Teil des Spülwassers des Phosphatierungsbads vor dem Durchfluss durch den ersten Durchflusskanal einer weiteren Vorbehandlung, insbesondere einer Ausfällung und/oder Filtration zugeführt. Hierdurch kann die Effizienz der Abtrennung des Metalls verbessert werden.

In einer besonders bevorzugten Ausführungsform wird das Phosphatierungsbad stufenweise behandelt. Das Phosphatierungsbad wird dazu nach dem Austritt aus einer ersten Stufe der erfindungsgemäßen Vorrichtung in eine zweite oder noch weitere Stufen der erfindungsgemäßen Vorrichtung geführt. Dadurch kann die RestKonzentration des zu entfernenden Metalls weiter abgesenkt werden. Es kann bei allen Stufen unbeladenes Extraktionsmittel eingesetzt werden. Alternativ kann das Extraktionsmittel im Gegenstrom geführt werden.

Nachfolgend wird die Erfindung anhand einer lediglich ein Ausführungsbeispiel der Erfindung darstellenden Zeichnung näher erläutert. Darin zeigen:
- Fig. 1: eine Vorrichtung mit einem rohrförmigen Durchflusskanal in einer schematischen Seitenansicht;
- Fig. 2: eine schematische Darstellung einer Gesamtvorrichtung, die die Vorrichtung enthält.

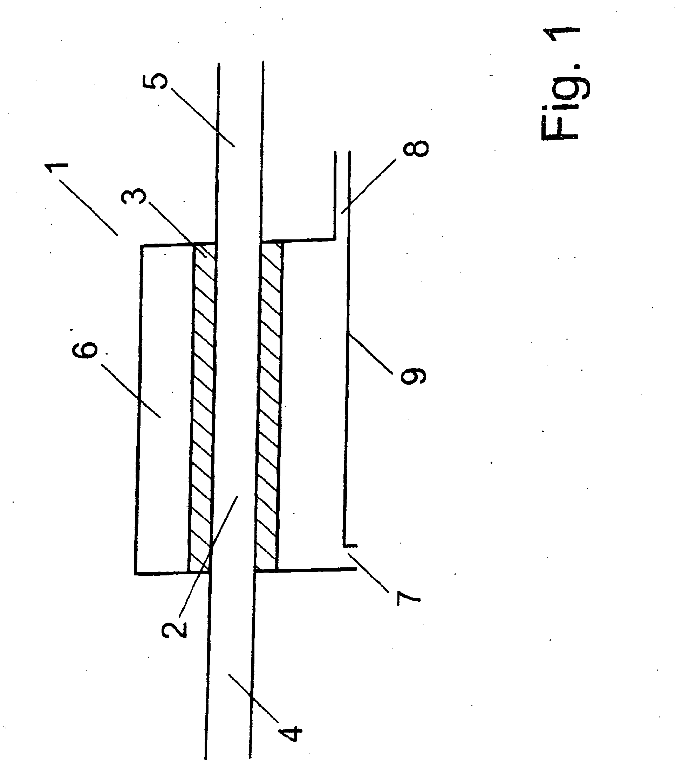

Fig. 1 zeigt eine Vorrichtung 1 zur selektiven Abtrennung zumindest eines Metalls aus einem Phosphatierungsbad mit einem ersten Durchflusskanal 2. Der Durchflusskanal 2 wird durch den Innenkanal einer rohrförmig ausgebildeten Hohlfasermembran 3 gebildet. Dem ersten Durchflusskanal 2 wird über einen Zufluss 4 Phosphatierungsbad zugeführt. Das durch den ersten Durchflusskanal 2 durchgeströmte Phosphatierungsbad wird am Ausgang des ersten Durchflusskanals 2 in einen Abfluss 5 geleitet.

Die Vorrichtung 1 weist fernern einen zweiten Durchflusskanal 6 auf, der die zylinderförmige Außenoberfläche der Hohlfasermembran 3 vollständig umgibt. Dem zweiten Durchflusskanal 6 wird über einen Zufluss 7 Extraktionsmittel zugeführt. Ein Abfluss 8 führt Extraktionsmittel ab, das durch den zweiten Durchflusskanal 6 geströmt ist. Die Hohlfasermembran 3 ist derart angeordnet, daß sie auf ihrer einen Seite, nämlich ihrer Innenseite, den ersten Durchflusskanal 2 begrenzt und auf ihrer zweiten Seite, nämlich ihrer Außenoberfläche, den zweiten Durchflusskanal 6 zumindest teilweise begrenzt. Der zweite Durchflusskanal 6 wird ferner durch Begrenzungswände 9 begrenzt. Die Hohlfasermembran 3 ist derart ausgebildet, daß sie den Durchtritt eines abzutrennenden Metalls von dem Phosphatierungsbad in das Extraktionsmittel erlaubt.

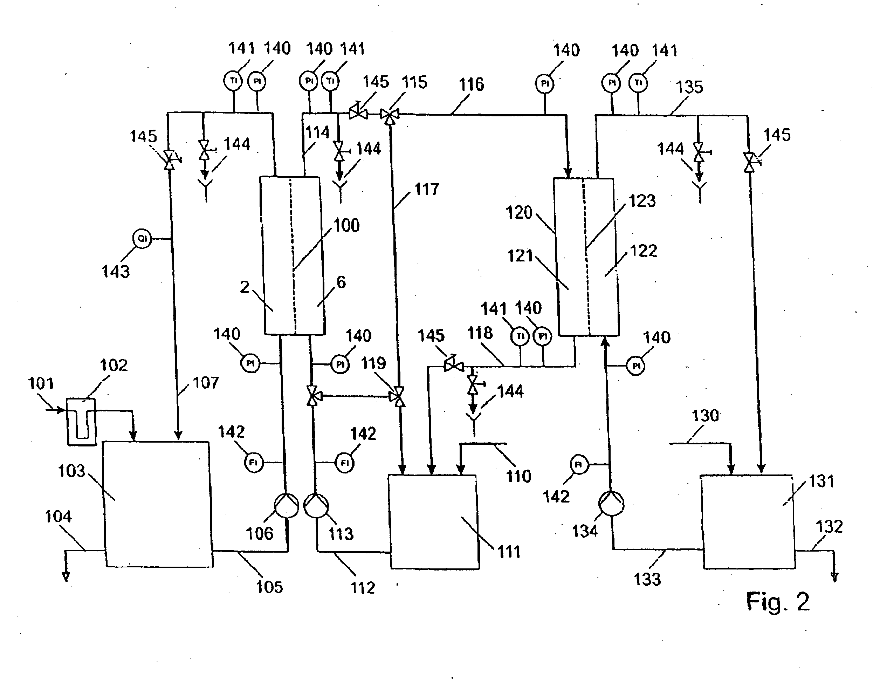

Die in Fig. 2 dargestellte Vorrichtung zu selektiven Abtrennung zumindest eines Metalls aus einem Phosphatierungsbad weist einen ersten Durchflusskanal 2 auf, durch den ein Teil des Phosphatierungsbads geführt wird. Ein Extraktionsmittel fließt durch einen zweiten Durchflusskanal 6. Eine Membran 100, die auf ihrer einen Seite den ersten Durchflusskanal 2 und auf ihrer zweiten Seite den zweiten Durchflusskanal 6 zumindest teilweise begrenzt, erlaubt den Durchtritt des abzutrennenden Metalls von dem Phosphatierungsbad in das Extraktionsmittel.

Die in Fig. 2 dargestellte Vorrichtung weist einen Zufluss 101 für Phosphatierungsbad auf. Das Phosphatierungsbad durchfließt einen Filter 102 und gelangt in einen Vorlagetank 103. Der Vorlagetank 103 weist einen Abfluss 104 für metallarmes Phosphatierungsbad auf. Ferner weist der Vorlagetank 103 einen Abfluss 105 auf, mit dem Phosphatierungsbad über eine Pumpe 106 in den ersten Durchflusskanal 2 gepumpt wird. Nach Durchfließen des ersten Durchflusskanals 2 gelangt das Phosphatierungsbad über den Zufluss 107 zurück in den Vorlagetank 103.

Über einen Zufluss 110 wird Extraktionsmittel einem Extraktionsmitteltank 111 zugeführt. Der Extraktionsmitteltank 111 weist einen Abfluss 112 auf. Über den Abfluss 112 wird dem Extraktionsmitteltank 111 Extraktionsmittel entnommen und über eine Pumpe 113 dem zweiten Durchflusskanal 6 zugeführt. Der zweite Durchflusskanal 6 weist einen Abfluss 114 auf, der zu einem Dreiwegeventil 115 führt. Je nach Stellung des Dreiwegeventils kann das von dem zweiten Durchflusskanal 6 kommende Extraktionsmittel in die Leitung 116 oder in die Leitung 117 oder in einer Zwischenstellung in beide Leitungen 116, 117 einströmen.

Die Leitung 116 führt zu einer Rückgewinnungsvorrichtung 120. Diese Rückgewinnungsvorrichtung 120 weist einen ersten Durchflusskanal 121 auf, durch den das Extraktionsmittel aus der Leitung 116 strömt. Ferner weist die Rückgewinnungsvorrichtung 120 einen zweiten Durchflusskanal 122 auf, durch den eine Stripsäure fließt. Eine zweite Membran 123 begrenzt auf ihrer einen Seite den ersten Durchflusskanal 121 und auf ihrer zweiten Seiten den zweiten Durchflusskanal 122 und erlaubt den Durchtritt eines abzutrennenden Metalls von dem Extraktionsmittel in die Stripsäure.

Über die Leitung 118 gelangt das durch den ersten Durchflusskanal 121 geströmte Extraktionsmittel zurück in den Extraktionsmitteltank 111.

Die in Fig. 2 gezeigte Vorrichtung kann so betrieben werden, dass das Extraktionsmittel von dem zweiten Durchflusskanal 6 über den Abfluss 114, das Dreiwegeventil 115 und die Leitung 116 zu der Rückgewinnungsvorrichtung 120 fließt, so dass das beim Durchfluss durch den zweiten Durchflusskanal 6 beladene Extraktionsmittel in der Rückgewinnungsvorrichtung 120 sofort gereinigt werden kann. Alternativ kann die in Fig. 2 gezeigte Vorrichtung in zwei zeitlich nacheinander folgenden Verfahrensschritten geführt werden. In einem ersten Verfahrensschritt wird das Extraktionsmittel beladen, in dem es vom Extraktionsmitteltank 111 über die Pumpe 113, den zweiten Durchflusskanal 6, den Abfluss 114, das Dreiwegeventil 115, die Leitung 117, das Dreiwegeventil 119 zurück in den Extraktionsmitteltank 111 geführt wird. In einem zweiten Verfahrensschritt, in dem das Extraktionsmittel dann nicht mehr beladen wird, also kein Phosphatierungsbad mehr durch den ersten Durchflusskanal 2 geführt wird, kann das Extraktionsmittel über den Abfluss 112, die Pumpe 113, die Zuleitung zum Dreiwegeventil 119, das Dreiwegeventil 119, die Leitung 117, Das Dreiwegeventil 115, die Leitung 116 zu der Rückgewinnungsvorrichtung 120 geführt werden kann. Dadurch kann in einem zweiten, separaten Verfahrensschritt das Extraktionsmittel gereinigt werden.

Über eine Zufuhr 130 wird Stripsäure einem Säuretank 131 zugeführt. Der Säuretank 131 weist einen Auslass 132 für Metallkonzentrat auf. Ferner weist der Säuretank einen Ausfluss 133 auf. Über den Ausfluss 133 wird dem Säuretank 131 Stripsäure über eine Pumpe 134 entnommen und dem zweiten Durchflusskanal 122 der Rückgewinnungsvorrichtung 120 zugeführt. Über eine Ausflussleitung 135 fließt die durch den zweiten Durchflusskanal 122 geströmte Stripsäure zurück in den Säuretank 131.

Die in Fig. 3 dargestellte Vorrichtung weist Druckmesseinrichtungen 140, Temperaturmesseinrichtungen 141, Messvorrichtungen für den Volumenstrom 142, eine Messvorrichtung für die Leitfähigkeit 143, Probeentnahmestellen 144 und Druckregelventile 145 auf, um den Prozess zu überwachen und zu steuern, bzw. zu regeln.

## Patentansprüche

1. Verfahren zur selektiven Abtrennung zumindest eines Metalls aus einem Phosphatierungsbad, bei dem
- der pH-Wert des Phosphatierungsbads in einer Vorbehandlung angepasst wird, das Phosphatierungsbad nach der Vorbehandlung durch einen ersten Durchflusskanal (2) geführt wird,
- ein Extraktionsmittel durch einen zweiten Durchflusskanal (6) fließt und
- das abzutrennende Metall durch eine Membran (3, 100), die auf ihrer einen Seiten den ersten Durchflusskanal (2) und auf ihrer zweiten Seite den zweiten Durchflusskanal (6) zumindest teilweise begrenzt, in das Extraktionsmittel übergeht.

2. Verfahren nach Anspruch 1, **dadurch gekennzeichnet, daß** das Phosphatierungsbad, das durch den ersten Durchflusskanal (2) geführt wird, mit einem höheren Druck durch den ersten Durchflusskanal (2) geführt wird, als der Druck, mit dem das Extraktionsmittel durch den zweiten Durchflusskanal (6) fließt.

3. Verfahren nach Anspruch 1 oder 2, **dadurch gekennzeichnet, daß** das in das Extraktionsmittel eingebrachte Metall in einer Rückgewinnungsvorrichtung (120) aus dem Extraktionsmittel gewonnen wird.

4. Verfahren nach Anspruch 3, **dadurch gekennzeichnet, daß** das in das Extraktionsmittel eingebrachte Metall in der Rückgewinnungsvorrichtung (120) durch eine zweite Membran (123) in eine Stripsäure übertritt.

5. Verfahren nach einem der Ansprüche 1 bis 4, **dadurch gekennzeichnet, daß** das Phosphatierungsbad beim Durchfluss durch den ersten Durchflusskanal (2) eine Temperatur von > 20° und < 90° aufweist und/oder daß das Extraktionsmittel beim Durchfluss durch den zweiten Durchflusskanal (6) eine Temperatur von > 20° und < 90° aufweist.

6. Verfahren nach einem der Ansprüche 1 bis 8, **dadurch gekennzeichnet, daß** das Phosphatierungsbad vor dem Durchfluss durch den ersten Durchflusskanal (2) einer weiteren Vorbehandlung zugeführt wird.

## Claims

1. Method for the selective separation of at least one metal from a phosphating bath, wherein
- the pH of the phosphating bath is adjusted in a pre-treatment, the phosphating bath is led through a first flow channel (2) after the pre-treatment,
- an extracting agent flows through a second flow channel (6) and
- the metal to be separated passes through a membrane (3, 100), which on one of its sides at least partially delimits the first flow channel (2) and on its second side at least partially delimits the second flow channel (6), into the extracting agent.

2. Method according to claim 1, **characterised in that** the phosphating bath, which is led through the first flow channel (2), is led through the first flow channel (2) at a higher pressure than the pressure at which the extracting agent flows through the second flow channel (6).

3. Method according to claim 1 or 2, **characterised in that** the metal introduced into the extracting agent is obtained from the extracting agent in the recovery device (120).

4. Method according to claim 3, **characterised in that** in the recovery device (120) the metal introduced into the extracting agent passes through a second membrane (123) into a stripping acid.

5. Method according to any one of claims 1 to 4, **characterised in that** as it flows through the first flow channel (2) the phosphating bath has a temperature of > 20° and < 90° and/or **in that** as it flows through the second flow channel (6) the extracting agent has a temperature of > 20° and < 90°.

6. Method according to any one of claims 1 to 5, **characterised in that** before flowing through the first flow channel (2) the phosphating bath is fed to an additional pre-treatment.

## Revendications

1. Procédé de séparation sélective d'au moins un métal d'un bain de phosphatation, dans lequel
- le pH du bain de phosphatation est adapté lors d'un traitement préalable, le bain de phosphatation est conduit après le traitement préalable à travers un premier canal d'écoulement (2),
- un moyen d'extraction s'écoule à travers un deuxième canal d'écoulement (6) et
- le métal à séparer passe dans le moyen d'extraction à travers une membrane (3, 100) qui délimite au moins partiellement d'un de ses côtés le premier canal d'écoulement (2) et de son deuxième côté le deuxième canal d'écoulement (6).

2. Procédé selon la revendication 1, **caractérisé en ce que** le bain de phosphatation qui est conduit à travers le premier canal d'écoulement (2) est conduit à travers le premier canal d'écoulement (2) à une pression plus élevée que la pression à laquelle le moyen d'extraction s'écoule à travers le deuxième canal d'écoulement (6).

3. Procédé selon la revendication 1 ou 2, **caractérisé en ce que** le métal introduit dans le moyen d'extraction est extrait du moyen d'extraction dans un dispositif de récupération (120).

4. Procédé selon la revendication 3, **caractérisé en ce que** dans le dispositif de récupération (120), le métal introduit dans le moyen d'extraction passe dans un acide de strippage à travers une deuxième membrane (123).

5. Procédé selon une des revendications 1 à 4, **caractérisé en ce que** le bain de phosphatation présente une température supérieure à 20° et inférieure à 90° lors de son passage à travers le premier canal d'écoulement (2) et/ou que le moyen d'extraction présente une température supérieure à 20° et inférieure à 90° lors de son passage à travers le deuxième canal d'écoulement (6).

6. Procédé selon une des revendications 1 à 5, **caractérisé en ce qu'**avant son passage à travers le premier canal d'écoulement (2) le bain de phosphatation est amené à un autre traitement préalable.
